# FASCICULE DE BREVET EUROPEEN

(11) **EP 0 296 981 B1**
(45) Date de publication et mention de la délivrance du brevet: **30.08.1995**
(21) Numéro de dépôt: 88401606.4
(22) Date de dépôt: 24.06.1988
(51) Int. Cl.: C04B 35/66, C04B 35/82, C04B 35/14, C04B 41/50, B22D 41/08, B22D 11/10

(54) **Revêtement isolant pour corps réfractaires, procédé de revêtement et article associés**
Isolierbeschichtung für feuerfeste Körper, Beschichtungsverfahren und verwandte Artikel
Insulating coating for refractories, coating process, and associated articles

(30) Priorité: 26.06.1987 FR 8709023
(43) Date de publication de la demande: 28.12.1988
(73) Titulaire: VESUVIUS CRUCIBLE COMPANY, Wilmington, Delaware 19899 (US)
(72) Inventeur: Rancoule, Gilbert, F-59600 Maubeuge (FR)
(74) Mandataire: Martin, Jean-Jacques

(56) Documents cités:
- EP-A- 0 102 292
- EP-A- 0 178 155
- BE-A- 851 026
- LU-A- 86 363

## Description

L'invention concerne des composants réfractaires utilisés dans la coulée de métaux et, en particulier, des revêtements thermiques isolants servant à protéger les composants réfractaires et à en rehausser les performances en prolongeant leur temps de service.

Le revêtement isolant selon l'invention convient parfaitement pour emploi sur divers corps réfractaires tels que des busettes de coulée immergées des tubes de protection de jet pour les transferts poche-répartiteur de coulée desservant les tubes de protection ou des articles analogues qu'on emploie dans la coulée continue de métaux, tels que l'acier. Jusqu'à présent, pour protéger les busettes immergées, les tubes de protection ou autres, du choc thermique qu'ils subissent lors du démarrage d'une opération de coulée continue, il était courant de traiter les busettes d'une façon quelconque pour réduire le choc thermique causé par leur mise en route à froid. Fréquemment, on préchauffait la busette avant la coulée. Un autre expédient de protection du choc thermique lors du démarrage à froid est l'application d'une protection isolante en feuille ou nappe imprégnée de fibres céramiques sur l'extérieur de la busette de coulée. Bien qu'ayant une bonne efficacité pour minimiser le choc thermique et les problèmes afférents à la fissuration, cette nappe isolante est onéreuse en raison de la coupe, du nappage et de sa fixation nécessaires pour ajuster correctement la feuille isolante autour de la surface extérieure de la busette réfractaire. Bien entendu, le revêtement de papier n'est pas appliqué dans les cavités intérieures de la busette.

Outre les problèmes de choc thermique, les busettes de la technique antérieure qu'on utilise dans des opérations de coulée continue sont également sujettes au pontage ou au figeage du métal entre la busette immergée et les parois adjacentes du moule de coulée continue refroidi à l'eau. Les opérations précitées de préchauffage ou nappage avec du papier isolant ont tendance à réduire au minimum un tel pontage nuisible, mais tous les problèmes sont loin d'être résolus. Par exemple, dans le cas d'une busette isolée enveloppée, il se produit une accumulation interne de métal figé du fait que l'intérieur de la busette ne possède aucune protection isolante. On a bien décrit dans le document LU-A-86 363 un tube de coulée pourvu d'un revêtement réfractaire interne de silice fondue afin d'éviter le bouchage par déposition d'alumine du conduit lors de la coulée. Néanmoins, ce dispositif nécessite également un préchauffage préalable à cause de la conductivité élevée matériau de base du tube.

La présente invention résout un grand nombre des problèmes qui prennent du temps et sont onéreux, problèmes que l'on rencontrait jusqu'à présent dans la préparation et l'emploi de busettes immergées et de composants analogues utilisés dans des opérations de coulée continue de l'acier. La présente invention fournit un revêtement isolant pour des busettes de coulée de ce type et des dispositifs analogues, qui permet d'éliminer la nécessité de préchauffer la busette. Le revêtement selon la présente invention empêche des chocs thermiques indésirables dans le corps de la busette pendant la mise en route et aussi supprime le pontage ou figeage indésirable entre la busette et le moule pendant la coulée. Le revêtement isolant selon l'invention couvre également la face intérieure ou cachée de la busette pour assurer une isolation dans celui-ci, ce qui empêche une accumulation indésirable de métal figé dans le corps de busette pendant la coulée.

Brièvement, la présente invention fournit un revêtement thermique isolant pour un corps réfractaire exposé aux métaux en fusion, tel que des busettes immergées de coulée qu'on emploie dans la coulée continue de l'acier. De préférence, le revêtement isolant est appliqué aussi bien sur les surfaces extérieures que les surfaces intérieures du corps réfractaire sous forme d'un mélange défloculé, de préférence par immersion. La composition préférée du revêtement en barbotine selon l'invention comprend essentiellement :

| Ingrédient | % en poids |
|---|---|
| Grains de silice fondue | au moins 30% |
| Fibres de matière céramique | 5 à 10% |
| Eau | 15 à 30% |
| Liant | 0 à 7% |
| Fritte | 0 à 40% |

On peut modifier le coefficient de dilatation thermique du revêtement pour simuler celui du substrat réfractaire en remplaçant les grains de silice fondue dans la composition défloculée préférée ci-dessus, par une ou plusieurs matières céramiques. Les matières céramiques appropriées de remplacement sont notamment la poudre d'alumine, la poudre de zircone, la poudre de mullite et les billes d'alumine.

Dans une forme préférée de l'invention, on enduit par immersion une busette de coulée continue ou un composant analogue en un matériau réfractaire classique tel que l'alumine-graphite avec ladite composition de mélange réfractaire contenant de la silice fondue défloculée, pendant un temps déterminé se situant entre environ 5 et 60 secondes. De préférence, le corps réfractaire est soumis à une glaçure et peut être à la température ambiante ou préchauffé à une température d'environ 70 à 120°C avant l'immersion pour obtenir une épaisseur de revêtement isolant comprise entre environ 1 et 6 mm. Une épaisseur préférée du revêtement est d'environ 3 mm. Après une durée appropriée de séchage, le corps réfractaire revêtu est prêt à servir. Le revêtement présente une surface relativement dure à l'état séché et résiste bien au maniement grossier qui est de règle à l'atelier.

### DESCRIPTION DETAILLEE DE L'INVENTION

On prépare un mélange défloculé de la composition de revêtement isolant en formant d'abord une barbotine céramique, consistant de préférence en une partie prépondérante (30 à 85% en poids) de grains de silice fondue (SiO₂) plus 15 à 30% d'eau en poids. Les grains de silice fondue, qu'on obtient de préférence par un procédé d'atomisation, sont dans un état pulvérulent fin ayant une granulométrie de préférence inférieure à 145 microns. Les particules de SiO₂ sont entièrement défloculées dans la barbotine avant la préparation de la composition du mélange. La fine granulométrie de la poudre de silice fondue assure une réaction très rapide permettant d'obtenir la défloculation rapide désirée dans la barbotine. La masse volumique apparente (MVA) de la barbotine doit être réglée dans l'intervalle d'environ 1,700 à 2,000 g/cm³. De préférence, il convient de régler la viscosité dans l'intervalle de 0,3 à 0,5 Pa/s, en utilisant un viscosimètre Brookfield de modèle LV comportant une broche n°1 qui tourne à 12 t/min. On peut substituer en totalité ou en partie d'autres matières céramiques pour diluer ou remplacer la silice fondue ; les matières ainsi utilisables sont notamment: la poudre d'alumine, la poudre de zircone, la poudre de mullite et les billes d'alumine. La silice fondue présente des coefficients très faibles de dilatation thermique et de conductivité thermique, et constitue ainsi un matériau de premier ordre dans la plupart des applications de revêtement. Cependant, dans certaines applications, il peut être souhaitable d'augmenter le coefficient de dilatation thermique du revêtement ou d'autres propriétés pour une concordance encore plus proche avec le corps réfractaire-substrat. Dans de tels cas, les poudres céramiques de dilution qui ont été citées peuvent être utilisées dans le mélange défloculé d'une façon bien connue des spécialistes.

La composition de revêtement selon l'invention contient aussi de préférence une addition allant jusqu'à 10% en poids de fibres céramiques qu'on incorpore dans le mélange en suspension. Une fibre céramique préférée qu'on peut utiliser est une fibre alumine-silice disponible dans le commerce et relativement bon marché, présentant un diamètre typique de 1 à 5 »m et une longueur d'environ 1 à 10 mm. La composition chimique, la dimension et/ou le type spécifique des fibres céramiques ne sont pas eux-mêmes considérés comme critiques aux fins de l'invention, mais la présence de fibres céramiques est importante pour augmenter la résistance à l'état brut du revêtement. D'autres matières qu'on peut utiliser en remplacement des fibres céramiques alumine-silice sont par exemple les fibres de zircone, les fibres de titane, les fibres de carbure silicium, et les fibres d'alumine. Les bilies allégées d'alumine et les billes allégées de zircone qu'on trouve dans le commerce sont également des produits de remplacement efficaces pour les fibres céramiques et non seulement confèrent un supplément de résistance au revêtement brut, mais améliorent également les caractéristiques d'isolement thermique du revêtement en raison des espaces d'air emprisonné dans leurs coquilles creuses.

Comme il a été indiqué plus haut, on prépare le mélange défloculé en incorporant la poudre de silice fondue fine avec l'eau pour assurer une défloculation complète, ou la dispersion de la barbotine. On ajoute ensuite les fibres céramiques. On obtient de bons résultats en utilisant un mélangeur à pales tel qu'un mélangeur Zyklos. On ajoute aussi de préférence des liants en une quantité allant jusqu'à 7% en poids environ. On peut utiliser des liants tels que le sodium hexaméthaphosphate, le silicate de sodium ou des résines acryliques pour conférer une rigidité, c'est-à-dire dureté et résilience, au revêtement. Si l'on incorpore trop de liant dans la composition du revêtement, on observe une baisse indésirable du caractère réfractaire du produit.

La composition défloculée contient aussi de préférence une fritte génératrice de verre dont le but est de conférer une certaine pyroplasticité au revêtement pendant l'utilisation à haute température. Les frittes sont bien connues, et ce sont des mélanges d'oxydes ayant des phases vitreuses qui subissent un ramollissement dans des intervalles spécifiques de températures et qui servent à combler les éventuelles fissures de retrait pouvant apparaître dans le revêtement par suite du frittage à mesure qu'augmente la température.

Après application du revêtement isolant à la surface du corps réfractaire et après séchage, on peut manier de façon normale le produit réfractaire revêtu sans endommager le revêtement. A l'état séché, une composition préférée du revêtement comprend essentiellement:

| Ingrédient | % en poids |
|---|---|
| silice vitreuse* | au moins 45% |
| fibres céramiques | 5 à environ 10 |
| liant | 0 à environ 7 |
| frittes | 0 à environ 40 |

| | |
|---|---|
| * comme précédemment stipulé, la silice fondue peut aussi être partiellement remplacée par l'alumine, la zircone et/ou la mullite. | |

Les exemples suivants, dans lesquels toutes les proportions sont en poids, servent à illustrer l'invention sans aucunement en limiter la portée:

### Exemple 1

Cinq tubes de protection de jet en réfractaire alumine-graphite du type qu'on emploie dans la coulée continue d'acier sont plongés dans une suspension ayant la composition suivante en poids: 72% de grains de silice vitreuse d'une granulométrie inférieure à 145 microns, 5% de fibres céramiques d'alumine-silice et 23% d'eau. On déposera au préalable sur les tubes une glaçure conventionnelle anti-oxydante et ensuite on préchauffe ces tubes à une température comprise dans un écart de 70 à 120°C. Le tableau ci-dessous montre l'effet de la température de préchauffage en fonction du temps d'immersion sur l'épaisseur du revêtement.

**Tableau**

| Epaisseur du revêtement | | | |
|---|---|---|---|
| temps d'immersion (s) : | 10 | 20 | 30 |
| température des tubes | | | |
| 100°C | 2,0 mm | 2,5 à 3,5 mm | 4,0 à 5,0 mm |
| 60°C | non mesurable | 1,0 mm | 2,0 mm |

Les données de ce tableau indiquent qu'une plus haute température du tube ou une plus longue durée d'immersion se traduisent par une plus grande épaisseur de revêtement. Par les essais, on constate que l'épaisseur du revêtement doit être de préférence comprise entre environ 1 et 6 mm pour pouvoir empêcher efficacement les chocs thermiques et/ou le pontage entre le tube et les parois latérales du moule. L'épaisseur du revêtement est de préférence d'environ 3 mm, et on voit sur le tableau ci-dessus qu'on l'obtient quand le tube est à une température de préchauffage d'environ 100°C et est plongé dans le mélange défloculé pendant environ 20 secondes. L'épaisseur du revêtement est également déterminée par la viscosité et par la teneur en eau du mélange en suspension, une plus grande épaisseur étant obtenue avec une plus forte viscosité, le temps et la température étant constants. L'immersion d'un tube à température ambiante est également possible et est l'un des procédés préférés de l'invention.

Bien entendu, les spécialistes comprendront qu'on peut utiliser des procédés autres que l'immersion pour appliquer un revêtement en suspension aqueuse sur une pièce réfractaire. Parmi les autres procédés possibles, on peut indiquer la pulvérisation, l'application au pinceau ou la coulée de la composition Le procédé par immersion pour appliquer le mélange isolant convient particulièrement bien pour revêtir des tubes réfractaires tels que des busettes immergées de coulée, étant donné que les surfaces intérieures des tubes peuvent être revêtues en même temps que l'extérieur quand la pièce est plongée dans la composition. Quand il est appliqué sur les faces intérieures, le revêtement assure une couche isolante efficace pendant la mise en route à froid ce qui empêche le figeage du métal sur les parois du tube et les limitations qui en résultent du débit d'écoulement.

### Exemple 2

On soumet à une glaçure anti-oxydante vingt-quatre busettes réfractaires en graphite d'alumine et ensuite on les revêt par immersion dans un mélange défloculé préparé avec la même composition que dans l'exemple 1. Le revêtement présente 3 mm d'épaisseur et, après séchage, comprend essentiellement environ 93% en poids de silice fondue et 7% en poids de fibres céramiques alumine-silice. On revêt aussi bien les surfaces extérieures que les surfaces intérieures des busettes. On tes te les vingt-quatre busettes dans une aciérie où le figeage ou pontage de l'acier entre le tube de coulée et le moule continu refroidi à l'eau est un problème fréquent. Les essais de coulée avec les vingt-quatre busettes ne font apparaître aucun figeage ni pontage dans l'une quelconque des busettes testées selon l'invention.

### Exemple 3

On revêt par immersion quatorze autres busettes immergées en réfractaire alumine-graphite, aussi bien sur l'intérieur que sur l'extérieur en utilisant la même composition de revêtement que dans les exemples 1 et 2. On teste les épouvettes pour observer l'effet du démarrage à froid sur une busette de coulée continue. Normalement, ces busettes réfractaires sont préchauffées à une température de 1000 à 2000°C pour empêcher les endommagements par choc thermique (fissuration). On soumet chacune des quatorze busettes revêtues à un démarrage à froid (sans préchauffage) de coulée et toutes resistent sans aucun signe d'endommagement par choc thermique. En outre, on ne constate aucune accumulation visible de métal figé sur les faces internes de l'une quelconque des quatorze pièces d'essais. On ne constate aucune oxydation du carbone à la surface des pièces d'essais en alumine-graphite, ce qui confirme encore une fois les avantages du revêtement selon la présente invention.

## Revendications

1. Procédé de revêtement d'une cette de coulée réfractaire du type qui vient en contact avec un métal en fusion, caractérisé en ce qu'on prépare une suspension consistant essentiellement en ingrédients suivants, en poids:
| | |
|---|---|
| grains de silice vitreuse | au moins 30% |
| fibres céramiques | 5 à 10% |
| liants | 0 à 7%, |
| frittes | 0 à 40% |
| eau | 15 à 30% ; |
on applique le mélange isolant sur toutes les surfaces du corps réfractaire en contact avec le métal pour former un revêtement sur celui-ci ; et on sèche le revêtement déposé.

2. Procédé selon la revendication 1, caractérisé en ce qu'on applique sur la busette de coulée réfractaire une glaçure d'anti-oxydation avant l'application dudit revêtement en suspension.

3. Procédé selon la revendication 2, caractérisé en ce que la busette de coulée réfractaire est à la température ambiante avant l'application dudit revêtement en suspension et en ce que ledit stade d'application consiste à immerger la busette de coulée réfractaire dans le mélange défloculé pendant une durée réglée pour obtenir ainsi un revêtement ayant une épaisseur prédéterminée.

4. Procédé selon la revendication 3, caractérisé en ce que l'épaisseur du revêtement est comprise entre 1 et 6 mm.

5. Procédé selon la revendication 2, caractérisé en ce qu'on préchauffe la busette de coulée réfractaire à une température prédéterminée avant le stade d'application, et en ce que le stade d'application consiste à immerger ladite busette de coulée préchauffée dans le mélange défloculé pendant une période réglée pour obtenir ainsi un revêtement ayant une épaisseur prédéterminée.

6. Procédé selon la revendication 5, caractérisé en ce que l'épaisseur du revêtement est comprise entre 1 et 6 mm.

7. Procédé selon l'une quelconque des revendications précédentes, caractérisé en ce que les grains de silice vitreuse sont sous forme d'une poudre d'une granulométrie inférieure à 145 microns et en ce qu'on les déflocule dans l'eau pour former une barbotine céramique avant le stade de préparation de ladite suspension.

8. Procédé selon l'une quelconque des revendications précédentes, caractérisé en ce que la silice vitreuse de la suspension est remplacée en totalité ou en partie par une ou plusieurs matières céramiques qui sont la poudre d'alumine, la poudre de zircone, la poudre de mullite et/ou les bulles d'alumine.

9. Article pour utilisation dans la coulée de métaux fondus et similaires, caractérisé en ce qu'il comprend une busette de coulée réfractaire en matière céramique portant un revêtement isolant sur toutes les surfaces extérieures et intérieures en contact avec le métal de ladite busette de coulee, en ce qu'à l'état sec, ledit revêtement comprend essentiellement, en poids, au moins 45 % de silice fondue, 5 à 10 % de fibres céramiques, 0 à 7 % d'un liant et 0 à 40 % d'une fritte et en ce que son épaisseur est de 1 à 6 mm.

10. Article selon la revendication 9, caractérisé en ce que le corps céramique est une busette en alumine-graphite pour utilisation dans la coulée continue de l'acier.

11. Article selon la revendication 9, caractérisé en ce que la busette de coulée comprend également une surface glaisée anti-oxydante en contact avec ledit revêtement isolant.

12. Article selon l'une quelconque des revendications 9 à 11, caractérisé en ce que le revêtement présente environ 3 mm d'épaisseur.

## Claims

1. Process for coating a refractory pouring nozzle of the type which comes into contact with a molten metal, characterized in that a slurry is prepared consisting essentially of the following ingredients, by weight:
| | |
|---|---|
| grains of vitreous silica | at least 30% |
| ceramic fibres | 5 to 10% |
| binders | 0 to 7% |
| frits | 0 to 40% |
| water | 15 to 30%; |
the insulating mixture is applied to all the surfaces of the refractory body in contact with the metal, in order to form a coating on the body; and the coating deposited is dried.

2. Process according to Claim 1, characterized in that an anti-oxidation glaze is applied to the refractory pouring nozzle before application of the said slurry coating.

3. Process according to Claim 2, characterized in that the refractory pouring nozzle is at room temperature before application of the said slurry coating and in that the said application step consists in dipping the refractory pouring nozzle into the deflocculated mixture for a controlled period in order thereby to obtain a coating having a predetermined thickness.

4. Process according to Claim 3, characterized in that the thickness of the coating is between 1 and 6 mm.

5. Process according to Claim 2, characterized in that the refractory pouring nozzle is preheated to a predetermined temperature before the application step and in that the application step consists in dipping the said preheated pouring nozzle into the deflocculated mixture for a controlled period in order thereby to obtain a coating having a predetermined thickness.

6. Process according to Claim 5, characterized in that the thickness of the coating is between 1 and 6 mm.

7. Process according to any one of the preceding claims, characterized in that the grains of vitreous silica are in the form of a powder having a particle size of less than 145 microns and in that they are deflocculated in water in order to form a ceramic slip before the step of preparing the said slurry.

8. Process according to any one of the preceding claims, characterized in that the vitreous silica in the slurry is replaced, completely or partialy, with one or more ceramics, which are alumina powder, zirconia powder, mullite powder and/or alumina bubbles.

9. Article for use in pouring molten metals and the like, characterized in that it comprises a refractory pouring nozzle made of ceramic, having an insulating coating on all the external and internal surfaces, in contact with the metal, of the said pouring nozzle, in that, in the dry state, the said coating essentially comprises, by weight, at least 45% of fused silica, 5 to 10% of ceramic fibres, 0 to 7% of a binder and 0 to 40% of a frit and in that its thickness is from 1 to 6 mm.

10. Article according to Claim 9, characterized in that the ceramic body is a nozzle made of alumina-graphite for use in the continuous casting of steel.

11. Article according to Claim 9, characterized in that the pouring nozzle also comprises an anti-oxidizing glazed surface in contact with the said insulating coating.

12. Article according to any one of Claims 9 to 11, characterized in that the coating is approximately 3 mm in thickness.

## Patentansprüche

1. Verfahren zum Beschichten eines feuerfesten (schwerschmelzbaren) Gießrohres des Typs, der mit einem geschmolzenen Metall in Kontakt kommt, dadurch gekennzeichnet, daß man eine Suspension herstellt, die im wesentlichen aus den folgenden Komponenten besteht:
| | |
|---|---|
| Quarzglas-Körnern | mindestens 30 Gew.-% |
| Keramikfasern | 5 bis 10 Gew.-% |
| Bindemitteln | 0 bis 7 Gew.-% |
| Fritten (Glasmassen) | 0 bis 40 Gew.-% |
| Wasser | 15 bis 30 Gew.-%; |
die isolierende Mischung auf alle Oberflächen des feuerfesten Körpers, die mit der Mischung in Kontakt kommen, aufbringt zur Bildung eines Überzugs auf denselben, und den aufgebrachten Überzug trocknet.

2. Verfahren nach Anspruch 1, dadurch gekennzeichnet, daß man auf das feuerfeste Gießrohr vor dem Aufbringen des genannten Überzugs als Suspension eine Antioxidations-Glasur aufbringt.

3. Verfahren nach Anspruch 2, dadurch gekennzeichnet, daß das feuerfeste Gießrohr vor dem Aufbringen des genannten Überzugs als Suspension Umgebungstemperatur hat und daß die genannte Beschichtungsstufe darin besteht, das feuerfeste Gießrohr in die entflockte Mischung für eine Zeitdauer einzutauchen, die so eingestellt wird, daß man einen Überzug mit einer vorgegebenen Dicke erhält.

4. Verfahren nach Anspruch 3, dadurch gekennzeichnet, daß die Dicke des Überzugs zwischen 1 und 6 mm liegt.

5. Verfahren nach Anspruch 2, dadurch gekennzeichnet, daß man das feuerfeste Gießrohr vor der Beschichtungsstufe auf eine vorgegebene Temperatur vorerwärmt und daß die Beschichtungsstufe darin besteht, das genannte vorerwärmte Gießrohr in die entflockte Mischung einzutauchen für eine Zeitdauer, die so eingestellt wird, daß man einen Überzug mit einer vorgegebenen Dicke erhält.

6. Verfahren nach Anspruch 5, dadurch gekennzeichnet, daß die Dicke des Überzugs zwischen 1 und 6 mm liegt.

7. Verfahren nach einem der vorhergehenden Ansprüche, dadurch gekennzeichnet, daß die Quarzglas-Körner in Form eines Pulvers mit einer Korngröße von weniger als 145 »m vorliegen und daß man sie in Wasser ausflockt zur Bildung eines Keramikschlickers vor der Stufe der Herstellung der genannten Suspension.

8. Verfahren nach einem der vorhergehenden Ansprüche, dadurch gekennzeichnet, daß das Quarzglas der Suspension vollständig oder teilweise ersetzt wird durch ein oder mehr Keramikmaterialien, bei denen es sich handelt um Aluminiumoxidpulver, Zirkoniumdioxidpulver, Mullitpulver und/oder Aluminiumoxidblasen.

9. Gegenstand (Formkörper) für die Verwendung beim Gießen von geschmolzenen und ähnlichen Metallen, dadurch gekennzeichnet, daß er umfaßt ein feuerfestes Gießrohr aus einem Keramikmaterial, das einen isolierenden Überzug auf allen mit dem Metall in Kontakt kommenden äußeren und inneren Oberflächen des genannten Gießrohres aufweist, und daß der genannte Überzug im tro_ckenen Zustand im wesentlichen umfaßt mindestens 45 Gew.-% Quarzglas, 5 bis 10 Gew.-% Keramikfasern, 0 bis 7 Gew.-% eines Bindemittels und 0 bis 40 Gew.-% einer Fritte (Glasmasse), und daß seine Dicke 1 bis 6 mm beträgt.

10. Gegenstand nach Anspruch 9, dadurch gekennzeichnet, daß der Keramikkörper ein Gießrohr aus Aluminiumoxid-Graphit ist für die Verwendung zum Stranggießen von Stahl.

11. Gegenstand nach Anspruch 9, dadurch gekennzeichnet, daß das Gießrohr auch eine Antioxidations-Tonoberfläche aufweist, die mit dem genannten isolierenden Überzug in Kontakt steht.

12. Gegenstand nach einem der Ansprüche 9 bis 11, dadurch gekennzeichnet, daß der Überzug eine Dicke von etwa 3 mm hat.
